(19) Europäisches Patentamt

European Patent Office

Office européen des brevets

(11) **EP 1 369 532 A2**

(12) **EUROPEAN PATENT APPLICATION**

(43) Date of publication:
   **10.12.2003 Bulletin 2003/50**

(51) Int Cl.⁷: **E01F 8/00**

(21) Application number: **03253557.7**

(22) Date of filing: **05.06.2003**

(84) Designated Contracting States:
   **AT BE BG CH CY CZ DE DK EE ES FI FR GB GR HU IE IT LI LU MC NL PT RO SE SI SK TR**
   Designated Extension States:
   **AL LT LV MK**

(30) Priority: **05.06.2002 JP 2002164983**

(71) Applicant: **Minebea Co., Ltd.**
   **Nagano-Ken 389-0293 (JP)**

(72) Inventors:
   • **Hokkirigawa, Kazuo**
     **Kitasaku-gun, Nagano-ken (JP)**
   • **Akiyama, Motoharu**
     **Kitasaku-gun, Nagano-ken (JP)**
   • **Hirose, Jun**
     **Kitasaku-gun, Nagano-ken (JP)**

(74) Representative: **Wilson Gunn Gee**
   **Chancery House,**
   **Chancery Lane**
   **London WC2A 1QU (GB)**

(54) **Air purifying sound insulating wall and its applications**

(57)   An air purifying and sound insulating wall and a highway air purifying and sound insulating wall having a formed surface made of RB ceramics or CRB ceramics that supports a photocatalyst. This sound insulating wall absorbs sound due to its porosity and has simple structure which is fully effective in dealing with NOx and other noxious gases. It is light in weight, weather-resistant and corrosion-resistant. It can withstand the strong radicals which are produced by the action of oxides of titanium and other photocatalysts. The wall is also easy to manufacture and has superior absorbent properties.

**EP 1 369 532 A2**

Printed by Jouve, 75001 PARIS (FR)

**Description**

The present invention relates to a weather-resistant air purifying sound insulation wall and a highway sound insulation wall using a new material that adsorbs noxious gases.

The sound insulating materials typically used in sound insulation walls include glass wool, rock wool, and metal fibers like aluminum, or these materials sintered with ceramics. Additionally, metal foams and inorganic foams, among others have been used. These materials have a soundproofing effect, and can mitigate noise pollution by their installation in noisy locations. Laid-open Japan Patent No. 2000-220117 identifies environmental problems associated with the nitrous oxide (NOx) that is contained in the exhaust gas produced by vehicles in motion, and particularly by automobiles and diesel engine vehicles. NOx reacts with solar ultraviolet radiation and carbon monoxide to produce an oxidant which produces so-called photochemical smog. However, the prior art sound insulation walls are intended to mitigate only noise pollution, so they have no effect whatsoever on environmental pollution caused by NOx. Therefore, Laid-open Japan Patent No. 2000-220117 proposes the use of an oxide of titanium or other photocatalyst to reduce NOx in a sound insulation panel which enables to mitigate noise pollution. However, the structure of the sound insulation is only made more complex since the photocatalyst is only supported by the cement-based coating which is applied to the surface of the sound insulation panel which encloses the sound insulating material. In addition, this method cannot adequately treat NOx and other noxious gases.

The present invention was conceived to solve the problems of the prior art described above and its object is to provide an air purifying and sound insulating wall made of formable ceramic or CRB ceramic carbon material which is a material that can withstand the strong radicals produced by the action of oxides of titanium and other photocatalysts, and which has superior adsorbent properties as a carbon material. This sound insulation wall also absorbs sound due to its porosity, and has a simple structure which is fully effective in dealing with NOx and other noxious gases. Moreover, intensive research toward the development of an air purifying sound insulation wall has resulted in a material for highway air purifying sound insulation walls that is effective in the photocatalysis and removal of noxious gases like NOx.

The above advantages and features are of representative embodiments only. It should be understood that they are not to be considered limitations on the invention as defined by the claims. Additional features and advantages of the invention will become apparent in the following description and from the claims.

This invention solves the problems of prior art by applying to the surface of formed body made of RB ceramic or CRB ceramic a photocatalyst to produce an air purifying sound insulation wall.

This invention provides a highway air purifying and sound insulating wall which overcomes a number of the defects of the prior art adsorbent materials. it is light in weight, weather-resistant and corrosion-resistant. It can withstand the strong radicals which are produced by the action of oxides of titanium and other photocatalysts. It is also easy to manufacture and has superior adsorbent properties.

The air purifying sound insulating wall and highway air purifying and sound insulating wall that uses materials called "RB ceramics" and "CRB ceramics." RB ceramics and CRB ceramics are materials which are made according to the following process.

The material uses rice bran, 900,000 tons of which are produced annually in Japan, 33 million tons of which are produced worldwide each year. The carbon material is obtained according to a known process developed through research by the first inventor of the present patent, Kazuo Hokirigawa. (See: *Kinō Zairyō* ["Functional Materials'], May 1997, Vol. 17, No. 5, pp. 24-28.)

This paper discloses a material in which after defatted rice bran obtained from rice bran is blended with a thermosetting resin and the resulting compact is dried, the shaped material is sintered in an inert gas atmosphere to create a carbon material (called "RB ceramic"). The paper also discloses the method of manufacture of the above material.

Any thermosetting resin is acceptable. Typical resins include phenolic resins, diaryl phthalate resins, unsaturated polyester resins, epoxy resins, polyimide resins, triazine resins, but phenolic resins are particularly suitable.

These resins can be used in combination with polyamide and other thermoplastic resins, as long as such use does not go beyond the scope of the invention.

The mixing ratio of defatted rice bran and thermosetting resin should be 50-90:50-10, and preferably is 70-80: 30-20.

It is a known fact that the dimensions of the finished formed body after sintering in an inert gas atmosphere may shrink by as much as 25% compared to the dimensions of the pressure-formed body, and therefore, it is difficult to produce a precise formed shape of the RB ceramic produced according to the above manufacturing method. Therefore, an improved ceramic — CRB ceramic — has been developed.

The following is a brief description of the CRB ceramic manufacturing method.

After defatted rice bran obtained from rice bran is kneaded together with a thermosetting resin and first sintered in an inert gas atmosphere at 700°C-1100°C, it is crushed into a carbonized powder. After this carbonized powder is kneaded together with a thermosetting resin and formed at a pressure of 20-30 MPa, the formed body is heat treated in an inert gas atmosphere at 100°C-1100°C.

It is preferable that the thermosetting resin in the primary sintering is a liquid of relatively low molecular weight.

An ordinary rotary kiln is used for the primary sintering, and the sintering time is usually 40-120 minutes. The mass ratio of carbonized powder mixed with thermosetting resin for the primary sintering should be 50-90:50-10, but preferably is 70-80:30-20.

The mixed and kneaded material combining the carbonized powder and thermosetting resin is pressure formed at a pressure of 20-30 MPa, and preferably at 21-25 MPa. The mold temperature should be approximately 150°C.

An electric furnace which can be adequately controlled is used for heat treatment, and the heat treatment time should be between 60-360 minutes.

The preferred heat treatment temperature is 600°C-1000°C, and the temperature should be brought up slowly to 500°C. Specifically, the rate of temperature rise should be 0.5-2°C/minute, and preferably approximately 1°/minute.

Also, after heat treatment has been completed, the temperature should be brought down slowly to the 500°C level. The furnace can then be allowed to cool naturally below 500°C.

Specific cooling rates should be 0.5-4°C/minute, and preferably approximately 1°C/ minute.

Inert gases that can be used during the primary sintering and heat treatment are helium, argon, neon, or nitrogen gas, although nitrogen gas is preferred.

The most significant difference between RB and CRB ceramics is that RB ceramics have a finished form shrinkage rate of as much as 25%, while CRB ceramics are superior, having an extremely small shrinkage rate of 3% or less.

In this invention, RB and CRB ceramics, are used as the material in an air purifying and sound insulation wall and the highway air purifying and sound insulation wall which uses it. These materials have a low impact on the environment and are superior for the following reasons. The general properties of RB ceramics and CRB ceramics are:

- They are extremely hard.
- They have an extremely low coefficient of expansion.
- They conduct electricity.
- Their specific gravity is small and they are light in weight.
- They have excellent abrasion-resistance properties.
- They are porous, sound absorbent, gas adsorbent, and water absorbent.
- They are easily formed.
- They allow the formation of ceramics which have a variety of properties according to the ratio of blended resins.
- They are chemically stable materials and resistant to the strong radicals produced as a byproduct of photocatalytic action.
- With rice bran as a raw material, these materials have little impact on the earth's environment, and help reduce dependence on natural resources.

Thus, these ceramic materials are sound-absorbent, gas-adsorbent, water-absorbent, in addition to being weather-resistant and lightweight. They have superior wear-resistance, are not easily damaged, and are thus particularly suitable for use in air purifying sound insulation walls and highway air purifying sound insulation walls which are used Outdoors.

Materials utilized in this invention, and particularly CRB ceramics with their secondary heat treatment temperature of 600°C, are porous, gas adsorbent, and water absorbent. They are strong and lightweight due to their low specific gravity, so they are excellent when used as air purifying sound insulation walls.

The photocatalyst used in this invention is typically oxides of titanium particles which react to the ultraviolet within the range of approximately 300nm-330nm, and have the effect of chemically decomposing water. Please note that as used in the present disclosure, the term "oxide" or "oxides" of titanium include at least titanium oxide and titanium dioxide. These oxide of titanium particles can break down the strong radicals that form when organics such as NOx, chemically break down water.

The important points underlying the principle of this invention are that the formed body made from RB ceramics or CRB ceramics is a porous carbonized material which can adsorb nitrous oxide, and further can absorb sound because of its porous qualities. The material can retain water, and the surface, which is exposed to sunlight and other light which contains ultraviolet radiation, can support photocatalytic particles. It is the simultaneous action of these properties that makes this material effective as an air purifying sound insulating wall. Typically, the preferred source of ultraviolet rays would be sunlight, but artificial light, such as florescent light or mercury lights may also be used.

In the embodiments of the present invention which use RB ceramics, the shrinkage rate of the finished product can be as much as 25% relative to its dimensions at the time of forming. Nevertheless, RB ceramics may still be used in the context of this invention since material made with RB ceramics can be adjusted in size by cutting or trimming.

With the exception of finished dimensions, both RB and CRB ceramics have essentially the same properties, therefore RB ceramics are not to be excluded from embodiments of the invention.

However, it is preferable that mainly CRB ceramic materials are used for this invention because of the high degree of dimensional accuracy that can be obtained in the forming operation.

In accordance with the present invention, the air purifying sound insulating wall can be made in a variety of embodiments with a wide variety of properties by combining the material as needed with steel or other well-known reinforcing materials, and implementing various ways to provide water supply apparatus to the air purifying sound insulating wall.

Photocatalysts that can be used in this invention are anatase, rutile, and amorphous titanium oxides. Anatase titanium oxide is preferable for its highly photocatalytic activity. Any particle size is acceptable for photocatalyst as long as particle size does not interfere with photocatalytic activity, but grain sizes of around 0.005μm-1μm are preferable.

Although an oxide of titanium in this invention can be deposited using the sputter deposition method or the vacuum deposition method, it is preferable to disperse the oxide of titanium in the binder to make a coating composition, and to apply this coating composition by dipping, spraying, or flow coating.

It is preferable for the photocatalyst in this invention to be 5-30 % by mass relative to the binder, but it is still preferable for it to be 1 % by mass to 10 % by mass. Sufficient photocatalysis will not take place if the photocatalyst is less than 0.5 % by mass relative to the binder. Deterioration of the organic binder will be accelerated if the photocatalyst amount exceeds 30 % by mass.

Effective organic binders for this invention are organic silicone resin and fluorine resin. Coatings comprising mixtures of alco-xylan hydrolyzers such as organo-polysiloxanes or tetraethoxysilane and titanium azole can be applied and formed by heating from 50°C-200°C. Fluorine resins that can be used are TFE resin (tetrafluorothylene resin), FEP resin (tetrafluorothylene 6-fluoropropylene copolymer resin), PVDF resin (polyvinylidene fluoride) and PVY (polyvinyl fluoride resin).

Inorganic binders that can be used in this invention include water, glass, and methyl silicate, among others. High temperature treatment is done after the photocatalyst dispersion liquid or powder and the inorganic binder are added and preliminary drying is performed.

Although it is acceptable to allow the air purifying sound insulating wall of this invention to be washed by the natural rain, it is preferable to sprinkle the wall periodically with water to wash away organic and NOx residuals that have been broken down by the action of the photocatalyst. For this purpose, it is desirable that air purifying sound insulating wall is constructed with wall blocks. Each of these wall blocks is preferably provided with a sprinkler nozzle periodically sprinkling water supplied by an electric pump.

It is particularly desirable for highway air purifying sound insulating walls, which are installed along busy expressways and city streets, to be provided with sprinkler nozzles and electric pumps.

In order to manufacture the CRB ceramics air purifying sound insulating wall in accordance with the first embodiment of the present invention, 75 Kg of defatted rice bran obtained from rice bran is kneaded together with 25 Kg of liquid phenolic resin (resol) and heated to 50°C-60°C. A plastic and homogeneous mixture is thus obtained.

The mixture is heated in a rotary kiln in a nitrogen atmosphere for 100 minutes at 900°C, thus performing the first baking. The obtained carbonized material is screened with a 60-mesh screen to obtain a carbonized powder with grain sizes of 50μm-250μm.

The resulting 75 Kg of carbonized powder is kneaded together with 25 Kg of solid phenolic resin (resol), while being heated to 100°C-150°C. A plastic and homogeneous mixture is thus obtained.

Next, the plastic material is pressure formed at 22 Mpa to produce a panel preferably sized 50cm X 50cm X 2cm. The mold temperature is 150°C.

The formed material is removed from the mold, heated in a nitrogen atmosphere at a rate of 1°C/minute up to 500°C, held at that temperature for 60 minutes, and is then heat-treated at 700°C for approximately 120 minutes.

Next, the material is cooled at a rate of 2°C-3°C/minute down to 500°C, and allowed to cool naturally below 500°C.

After mixing 56 weight parts of anatase titanium oxide sol (Nissan Chemical Industries, TA-15, solids 15wt%) with 33 weight parts of silica sol (Japan Synthetic Rubber, Glasca A liquid, solids 20wt%), 11 weight parts of methyltrimethoxysilane (Japan Synthetic Rubber, Glasca B liquid) and ethanol are added, and the mixture is stirred for additional 2 hours. The methyltrimethoxysilane gradually transforms into a composition that initiates hydrolyzing decomposition dehydrating polycondensation reactions. The composition thus obtained is applied to one side of the structural material to create a photocatalyst-containing layer. The preferred thickness of the photocatalyst-containing layer is 500μm.

In accordance with the present invention, the air purifying sound insulating wall has the following performance characteristics.

*Performance as a Sound Insulating Walt.* The air purifying sound insulating wall obtained in the above embodiment has a perpendicular incidence coefficient of sound absorption of 22% at 400Hz, and 58% at 1000Hz.

*Performance as a Photocatalyst* One panel of the air purifying sound insulating wall obtained according to the above embodiment was sealed in a space at room temperature and a relative humidity of 70% and a 10-ppm atmosphere. After leaving it in this space for two hours, the panel is exposed to ultraviolet light from a 100W black light.

Prior to exposing the panel to ultraviolet light, and after the panel had been in the sealed space for two hours, the nitrous oxide concentration in the atmosphere had decreased to 9 ppm. Such a result is obtained because the CRB ceramic used in the invention contains carbon which adsorbs the nitrous oxide.

Again, at room temperature and with a relative humidity of 70% and a 10 ppm nitrous oxide atmosphere, the panel is exposed to black light. The black light exposure times and concentration of nitrous oxide in the atmosphere are shown in Table 1.

Table 1

| UV light exposure time | Atmospheric NOx concentration (in ppm) | NOx concentration removal rate (%) |
|---|---|---|
| 0 | 10 | 0 |
| 1 | 7 | 30 |
| 5 | 3 | 70 |
| 10 | 2 | 80 |
| 100 | 0 | 100 |

In weatherability tests using an S-WOM (sunshine weatherometer), there was no significant decrease in the NOx concentration removal rate observed, even after more than 5000 hours' exposure to light.

In accordance with the alternative embodiments of the present invention, CRB ceramic manufacturing parameters are varied to produce an air purifying sound insulating wall of the first embodiment. Manufacturing parameters are shown in Table 2.

Table 2

| | Embod. 2 | Embod. 3 | Embod. 4 | Embod. 5 | Embod. 6 | Embod. 7 | Embod. 8 |
|---|---|---|---|---|---|---|---|
| Blending ratio (kg) | | | | | | | |
|   Defatted rice bran | 75 | 75 | 75 | 80 | 60 | 55 | 85 |
|   Thermoplastic resin | 25 | 25 | 25 | 20 | 40 | 35 | 15 |
| Primary firing (°C) | 900 | 900 | 900 | 850 | 1000 | 1000 | 800 |
| Time (minutes) | 80 | 90 | 70 | 80 | 70 | 70 | 80 |
| Average grain size (μm) | 90 | 90 | 90 | 40 | 120 | 50 | 130 |
| Blending ratio (kg) | | | | | | | |
|   Carbonized powder | 60 | 70 | 50 | 45 | 55 | 75 | 80 |
|   Thermoplastic resin | 40 | 30 | 50 | 55 | 45 | 25 | 20 |
| Forming pressure (Mpa) | 22 | 23 | 25 | 25 | 30 | 28 | 30 |
| Secondary firing (°C) | 750 | 900 | 850 | 800 | 1000 | 1100 | 900 |
|   Baking time (minutes) | 120 | 100 | 130 | 120 | 100 | 100 | 120 |
| Temp. increase rate | 2 | 1.5 | 1.5 | 1.5 | 2 | 1.5 | 1.5 |
| Cooling rate | 2 | 3 | 2 | 2 | 3 | 2 | 2 |
| Atmosphere | nitrogen | nitrogen | nitrogen | nitrogen | nitrogen | nitrogen | nitrogen |

Units for rate of temperature increase and cooling rate are in °C/minute.

The results of performance testing of the air purifying sound insulating wall obtained in Embodiments 2-8 are shown in Table 3:

| Characteristics of air purifying sound insulation wall | | | Embod. 2 | Embod. 3 | Embod. 4 | Embod. 5 | Embod. 6 | Embod. 7 | Embod. 8 |
|---|---|---|---|---|---|---|---|---|---|
| Compressive strength (MPa) | | | 80 | 70 | 90 | 70 | 80 | 70 | 60 |
| Perpendicular incidence coefficient of sound absorption | 400 Hz | | 24 | 26 | 25 | 24 | 26 | 30 | 28 |
| | 1000 Hz | | 60 | 61 | 61 | 59 | 62 | 64 | 63 |
| Atmospheric NOx concentration (ppm) | Exposure time | 0 | 10 | 10 | 10 | 10 | 10 | 10 | 10 |
| | | 1 | 7 | 6 | 7 | 7 | 6 | 6 | 6 |
| | | 5 | 5 | 3 | 6 | 6 | 4 | 3 | 4 |
| | | 10 | 3 | 1 | 4 | 5 | 2 | 1 | 2 |
| | | 100 | 0 | 0 | 0 | 0 | 0 | 0 | 0 |

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

**Claims**

1.   An air purifying sound insulating wall comprising a material selected from the group consisting of RB (rice bran) ceramic and CRB (carbonized rice bran) ceramic, wherein a photocatalyst is applied to said wall.

2.   The air purifying sound insulating wall according to Claim 1, wherein said wall comprises a planar shape.

3.   The air purifying sound insulating wall according to Claim 1, wherein said wall comprises an arcuate shape.

4.   The air purifying sound insulating wall according to Claim 1, wherein said wall comprises a cylindrical shape.

5.   The air purifying sound insulating wall according to any preceding claim, wherein said photocatalyst is exposed to ultraviolet light.

6.   The air purifying sound insulating wall according to any preceding claim, wherein said photocatalyst is combined with a binder.

7.   The air purifying sound insulating wall according to Claim 6, wherein said binder is sintered.

8.   The air purifying sound insulating wall according to Claim 6 or 7, wherein said photocatalyst is of at least 0.5 % by mass relative to said binder.

9.   The air purifying sound insulating wall according to any preceding claim, wherein said wall is reinforced with steel.

10.   The air purifying sound insulating wall according to Claims 1 to 8, wherein said wall is reinforced with inorganic fiber.

11.   The air purifying sound insulating wall according to any preceding claim, wherein said wall is a highway sound insulating wall.

12.   The air purifying sound insulating wall according to any preceding claim, further comprising a water sprinkling apparatus, wherein said wall is periodically sprinkled with water from said apparatus.

13.   The air purifying sound insulating wall according to any preceding claim, wherein said photocatalyst is an oxide of titanium.